# FASCICULE DE BREVET EUROPEEN

(11) **EP 1 539 417 B1**
(45) Date de publication et mention de la délivrance du brevet: **04.01.2006**
(21) Numéro de dépôt: 03762701.5
(22) Date de dépôt: 11.06.2003
(51) Int. Cl.: B23K 9/02

(54) **PROCEDE DE FABRICATION D'UN TRONCON D'UNE MEMBRURE D'UNE JAMBE DE SUPPORT D'UNE PLATE-FORME D'EXPLOITATION EN MER**
VERFAHREN ZUR HERSTELLUNG EINES TEILST CKS AUS EINEM ST TZSTREBENGLIED EINER HOCHSEE- LBOHRPLATTFORM
METHOD FOR MAKING A SECTION OF A SUPPORT STRUT MEMBER OF AN OFFSHORE OIL-DRILLING RIG

(30) Priorité: 04.07.2002 FR 0208397
(43) Date de publication de la demande: 15.06.2005
(73) Titulaire: Technip France, 92400 Courbevoie (FR)
(72) Inventeur: PRIMOT, Louis, F-44500 La Baule (FR); THOMAS, Pierre-Armand, F-92800 Puteaux (FR)
(74) Mandataire: Domenego, Bertrand
(86) Numéro de dépôt international: PCT/FR2003/001750
(87) Numéro de publication internationale: WO 2004/004959

(56) Documents cités:
- EP-A- 0 855 241
- DE-C- 945 585
- FR-A- 2 719 611
- FR-A- 2 807 682

## Description

La présente invention concerne un procédé de fabrication d'une membrure d'une jambe de support d'une plate-forme d'exploitation en mer.

Les plates-formes pétrolières et notamment les plates-formes auto-élévatrices comportent des jambes prenant appui sur le fond marin et une coque montée déplaçable et réglable en hauteur le long des jambes.

L'ensemble de la plate-forme est amené en flottaison jusqu'au site de forage ou d'exploitation et les jambes sont descendues jusqu'au contact du fond marin, puis en prenant appui sur les jambes, la coque est hissée au-dessus du niveau de la mer, jusqu'à une altitude qui la met hors de portée des plus hautes vagues.

Chaque jambe est constituée par des membrures verticales, par exemple au nombre de trois, reliées entre elles par un treillis de poutrelles métalliques.

Chaque membrure est constituée par des tronçons soudés bout à bout et formés chacun, d'une part, par une plaque principale rectangulaire et, d'autre part, par des raidisseurs semi-cylindriques en forme de demi-coquille soudés chacun sur l'une des faces principales de ladite plaque.

Généralement, chaque tronçon a une longueur comprise entre 12 et 35 mètres.

Les plaques principales comportent sur leurs bords latéraux des dents qui forment, sur une partie de la longueur des membrures, des crémaillères diamétralement opposées, destinées à coopérer avec des pignons de sortie de mécanismes d'entraînement montés sur la coque de la plate-forme.

Chaque raidisseur soudé sur l'une des faces principales des plaques rectangulaires possèdent une longueur inférieure à la longueur d'une plaque de façon à ménager, à chaque extrémité de la plaque, un espace libre permettant de souder les tronçons bout à bout au moment de l'assemblage de la membrure.

Pour assurer la continuité des raidisseurs, une pièce de liaison en forme de demi-coquille et de profil correspondant au profil des raidisseurs est positionnée au niveau de chaque espace libre et dans le prolongement des raidisseurs, après le soudage bout à bout des tronçons de la membrure.

Cette disposition permet de rabouter et de souder directement sur le chantier des tronçons de la membrure qui ont été préalablement préfabriqués dans l'atelier.

Un procédé de fabrication des membrures, et notamment un procédé de soudage des raidisseurs sur les plaques principales des membrures est décrit dans le document FR-2.719.611.

Les membrures, qui supportent la coque de la plate-forme, sont fortement sollicitées en fatigue et les cordons de soudure, notamment des raidisseurs sur les plaques principales, sont également fortement sollicités.

L'invention a pour but de proposer un procédé de fabrication qui permette d'améliorer, à moindre coût, la résistance des soudures longitudinales des membrures à la fatigue et à la fatigue par corrosion.

A cet effet, l'invention a pour objet un procédé de fabrication d'un tronçon d'une membrure d'une jambe de support d'une plate-forme d'exploitation en mer, la membrure comportant une plaque principale munie, sur au moins un bord longitudinal, de dents formant une crémaillère et au moins un raidisseur de forme semi-cylindrique soudé sur une face principale de la plaque principale suivant deux bords longitudinaux, le raidisseur et la plaque délimitant un conduit,
caractérisé en ce qu'il comporte, appliquées à au moins une partie de la longueur de la membrure, les étapes consistant en :
a) usiner chaque bord longitudinal du raidisseur pour ménager suivant le bord longitudinal, une lèvre pour l'appui sur la surface principale de la plaque principale, en ménageant suivant le bord longitudinal un chanfrein extérieur du côté opposé au conduit ;
b) appliquer une semelle de la lèvre d'appui sur la surface principale de la plaque ;
c) échauffer la lèvre d'appui pour assurer son soudage avec la plaque et former une soudure d'appui; et
d) former un cordon de soudure par apport de matière depuis l'extérieur du conduit dans l'espace délimité entre la soudure d'appui, le chanfrein extérieur et la surface principale de la plaque principale.

Suivant des modes particuliers de mise en oeuvre, le procédé comporte l'une ou plusieurs des caractéristiques suivantes :
- l'apport de chaleur pour provoquer l'échauffement de la lèvre d'appui en vue de son soudage avec la plaque est assuré depuis l'intérieur du conduit ;
- l'échauffement de la lèvre d'appui pour assurer son soudage avec la plaque s'effectue sans apport de matière ;
- l'échauffement de la lèvre d'appui pour assurer son soudage avec la plaque est effectué par une méthode de soudage à l'arc sous protection gazeuse avec électrode réfractaire ;
- il comporte, appliquée à au moins une partie de la longueur de la membrure, une étape d'usinage de chaque bord longitudinal du raidisseur pour ménager sur ce bord un chanfrein intérieur du côté de la lèvre d'appui tourné vers le conduit ;
- le cordon de soudure formé depuis l'extérieur du conduit emplit totalement l'espace délimité entre la surface principale de la plaque, le chanfrein extérieur et la lèvre d'appui ;
- la lèvre d'appui est comprise dans la moitié de l'épaisseur du raidisseur disposée du côté du conduit intérieur ;
- la distance séparant la surface latérale intérieure du raidisseur définie du côté du conduit de la lèvre d'appui est comprise entre 20 et 40 % de l'épaisseur du raidisseur ;
- la lèvre d'appui présente une excroissance latérale intérieure du côté du conduit au voisinage de sa semelle ;
- la hauteur minimale de l'excroissance est comprise entre 0 et 8 mm ;
- un profil en creux est défini entre l'excroissance et le chanfrein intérieur ;
- la hauteur de la lèvre d'appui mesurée à la base du chanfrein extérieur est comprise entre 6 et 12 mm ; et
- la largeur de la semelle est comprise entre 2 et 15 mm.

L'invention sera mieux comprise à la lecture de la description qui va suivre, donnée uniquement à titre d'exemple et faite en se référant aux dessins, sur lesquels :
- la figure 1 est une vue schématique en élévation d'une plate-forme pétrolière, par exemple auto-élévatrice ;
- la figure 2 est une vue schématique en perspective d'un tronçon de membrure d'une jambe de support réalisée par le procédé selon l'invention ;
- la figure 3 est une vue en coupe éclatée d'une plaque principale et de deux raidisseurs, avant assemblage de ces éléments ;
- la figure 4 est une vue schématique en coupe à plus grande échelle montrant une zone de raccordement entre une plaque principale et un raidisseur, avant soudage ;
- la figure 5 est une vue en coupe schématique de la plaque principale et des raidisseurs maintenus avant leur soudage ;
- les figures 6 et 7 sont des vues schématiques en coupe et à plus grande échelle de la zone de raccordement entre une plaque principale et un raidisseur, lors de la phase initiale de soudage ; et
- la figure 8 est une vue en coupe à plus grande échelle montrant une zone de raccordement entre une plaque rectangulaire et un raidisseur, après mise en oeuvre du procédé selon l'invention.

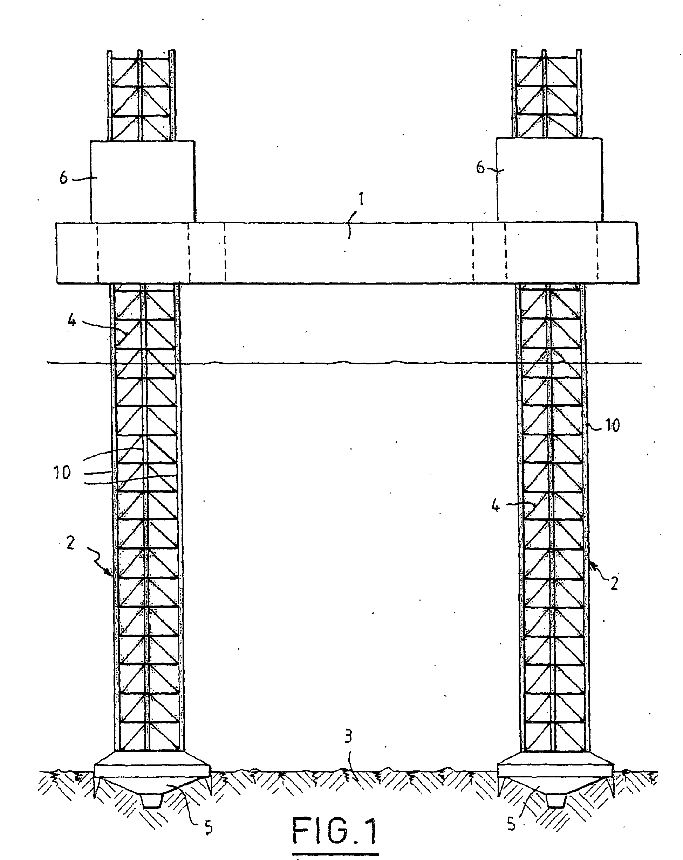

Sur la figure 1, on a représenté schématiquement une plate-forme pétrolière auto-élévatrice comprenant une coque 1 montée déplaçable sur des jambes verticales 2 destinées à prendre appui sur le fond marin 3, lorsque la plate-forme est en position de forage ou d'exploitation.

Chacune des jambes verticales 2 présente, dans le cas présent, une section triangulaire et est constituée de trois membrures verticales et parallèles 10, reliées entre elles par un treillis de poutrelles métalliques 4.

Chaque jambe 2 se termine à sa partie inférieure par un pied 5.

La plate-forme est par ailleurs équipée, au niveau de chaque jambe 2, d'un mécanisme d'entraînement et de suspension 6 de la coque par rapport auxdites jambes 2.

Des mécanismes d'entraînement permettent de descendre les jambes 2 jusqu'au contact du fond marin, puis en prenant appui sur les jambes, de hisser la coque 1 au-dessus de la mer jusqu'à une altitude qui la met hors de portée des plus hautes vagues.

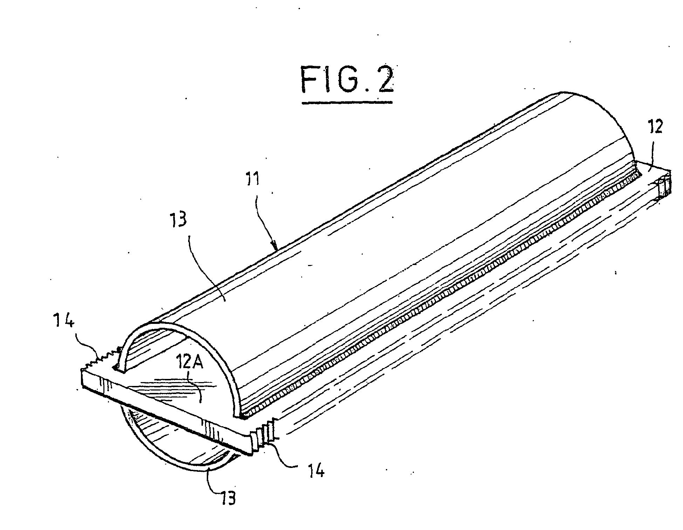

Chaque membrure 10 des jambes se compose de plusieurs tronçons 11 de grande longueur, de l'ordre de 12 à 35 mètres. Un tel tronçon est représenté à la figure 2.

Chaque tronçon 11 est formé d'une plaque principale rectangulaire 12 et de deux raidisseurs 13 en forme de demi-coquille, soudés chacun sur une face principale 12A de ladite plaque rectangulaire 12.

Les bords latéraux de la plaque rectangulaire 12 comportent des dents 14 pour former sur la membrure 10, deux crémaillères diamétralement opposées, destinées à coopérer avec des pignons de sortie, non représentés, des mécanismes d'entraînement 6.

La plaque principale 12 a une épaisseur comprise entre 120 mm et 220 mm.

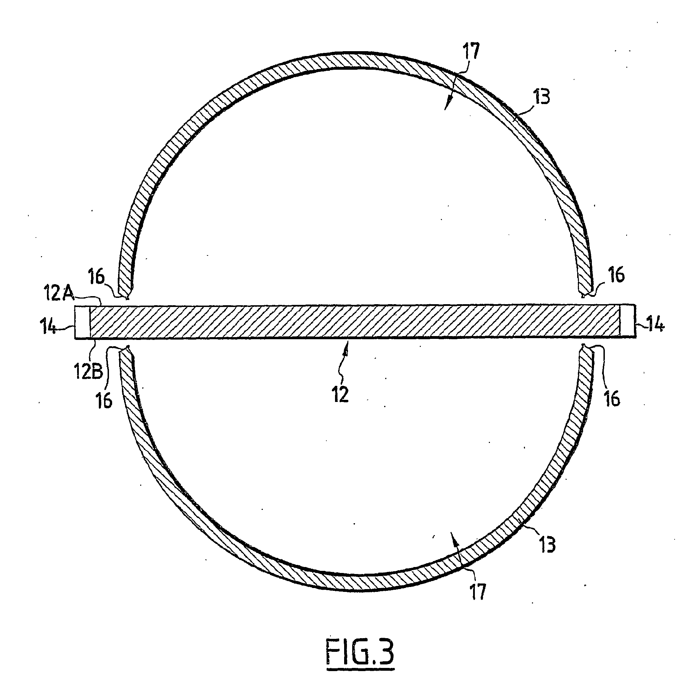

En se reportant maintenant aux figures 3 et suivantes, on va décrire l'assemblage d'un tronçon 11 de membrure 10 par le procédé selon l'invention.

Les raidisseurs 13 présentent une forme semi-cylindrique, et plus précisément une forme de demi-cylindre dans le mode de réalisation envisagé. Chaque raidisseur 13 a une épaisseur e comprise entre 40 mm et 120 mm.

Les raidisseurs 13 sont soudés sur la plaque principale 12 suivant leurs bords longitudinaux 16 s'étendant parallèlement l'un à l'autre.

Un conduit 17 est défini entre la plaque 12 et chaque raidisseur 13.

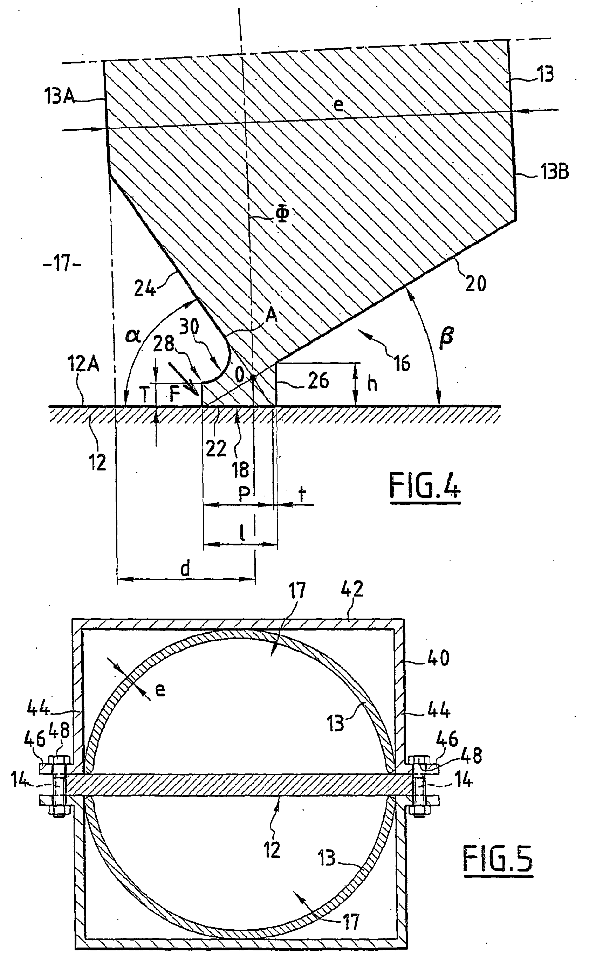

Comme illustré sur la figure 4, les bords longitudinaux 16 des raidisseurs sont préparés par usinage pour présenter un profil adapté au soudage.

En particulier, chaque bord longitudinal 16 est usiné pour présenter une lèvre 18 d'appui sur une surface principale 12A de la plaque. Un chanfrein extérieur 20 est ménagé sur le bord 16 du côté opposé au conduit 17 entre la lèvre 18 et la surface externe 13B du raidisseur.

La lèvre 18 s'étend avantageusement suivant toute la longueur du bord 16. Cette lèvre 18 définit une semelle d'appui plane 22 sur la surface principale 12A de la plaque. Cette semelle est usinée de manière à s'appliquer exactement à plat contre la surface principale 12A lors de l'assemblage du raidisseur et de la plaque.

La lèvre d'appui 18 est disposée avantageusement dans la moitié de l'épaisseur e du raidisseur 13 disposée du côté de la surface latérale intérieure de ce raidisseur.

Plus précisément, et comme illustré sur la figure 4, la distance d séparant la surface générale intérieure 13A du raidisseur de la lèvre d'appui 18 est comprise entre 0 et 50 % de l'épaisseur e du raidisseur 13.

De préférence, cette distance d est comprise entre 20 et 40 % de l'épaisseur e du raidisseur 13 et est de préférence sensiblement égale au tiers de cette épaisseur.

Le déport de la lèvre d'appui 18 dans le prolongement de l'épaisseur du raidisseur 13 à l'écart de la surface latérale intérieure 13A est obtenu par la présence d'un chanfrein 24 ménagé le long du bord 13 du côté du conduit 17. Ce chanfrein intérieur 24 est généralement rectiligne et définit avec la semelle 18 ou la surface principale 12A un angle α compris entre 40° et 70° et de préférence sensiblement égal à 55°. Du côté extérieur, le chanfrein 20 ménagé sur le bord 16 définit avec la semelle 22 ou la surface principale 12A de la plaque, un angle β compris entre 20° et 40° et de préférence sensiblement égal à 30°.

La lèvre d'appui 18 est ménagée globalement au droit du point de convergence 0 des deux chanfreins 20 et 24. Elle fait saillie par rapport à ces chanfreins suivant la direction de l'âme courbe φ du raidisseur 13 passant par le point 0.

Plus précisément, en section, la lèvre d'appui 18 présente, du côté du chanfrein extérieur 20, un front extérieur 26 s'étendant généralement perpendiculairement à la semelle 22 et reliant une extrémité de celle-ci au chanfrein 20. La hauteur h du front 26 est comprise entre 6 et 12 mm.

Du côté du conduit 17, la lèvre d'appui 18 se raccorde tangentiellement au chanfrein 24 en un point de liaison A. La semelle 22 se prolonge au-delà de la projection du point A sur la semelle 22 ou la surface principale 12A pour former une excroissance latérale intérieure 28.

La hauteur minimale notée T de cette excroissance latérale intérieure 28 est comprise entre 0 et 8 mm. Cette excroissance est reliée au chanfrein 24 par un tronçon concave 30 formant un canal de section semi-circulaire.

La présence de l'excroissance latérale intérieure 28 assure un déport de la semelle 22 du côté du conduit 17 par rapport à l'âme φ du raidisseur.

En particulier, la lèvre 18 présente en section généralement une forme s'évasant progressivement vers la semelle 22 du côté du conduit intérieur 17.

La largeur I de la semelle 22 est comprise entre 2 et 15 mm. Cette largeur se décompose en une largeur t correspondant à la distance séparant le front 26 du point d'intersection du chanfrein intérieur 24 et de la semelle 22 et une largeur P correspondant à la distance séparant le point d'intersection du chanfrein intérieur 24 et de la semelle 22 de l'extrémité intérieure de la semelle.

La largeur t est de préférence comprise entre 2 et 5 mm alors que la largeur P est comprise entre 0 et 10 mm.

Pour procéder à la liaison proprement dite d'un bord 16 du raidisseur et de la plaque 12, les raidisseurs sont d'abord appliqués sur les deux surfaces principales opposées 12A de la plaque principale 12. Il sont maintenus en position par des brides temporaires 40 de maintien des raidisseurs 13 le long des faces principales de la plaque 12. Ces brides sont constituées par des profilés définissant généralement la forme d'une fourche. Ces brides sont disposées à intervalles réguliers suivant la longueur du tronçon de membrure, en étant écartés les uns des autres d'une distance comprise entre 3 et 5 mètres.

Ces brides sont dimensionnées de sorte que le tronçon de fond, noté 42, et les tronçons latéraux notés 44 prennent appui, respectivement, sur la partie médiane de chaque raidisseur 13 et sur les flancs au voisinage immédiat des bords 16 devant être soudés. Chaque bride présente latéralement des pattes 46 propres à s'appuyer sur les marges de la plaque principale 12 dans la région où sont formées les dents 14. Des boulons 48 sont engagés dans des perçages correspondants des pattes 46 et assurent une liaison de deux brides disposées chacune d'un côté de la plaque 12. Les tiges des boulons s'étendent entre les dents 14.

La liaison des brides par les boulons engagés entre les dents 14 assure un maintien en position des raidisseurs 13 avant leur soudage.

Le bord 16 de chaque raidisseur est d'abord soudé sans apport de matière par chauffage, depuis l'intérieur du conduit 16, de la lèvre d'appui 18 et de la surface principale 12A associée de la plaque. Cet échauffement et cette fusion de la lèvre d'appui sont réalisés par exemple par soudage TIG, plasma et ses variantes, c'est-à-dire par soudage à l'arc sous protection gazeuse avec électrode réfractaire sans apport de matière.

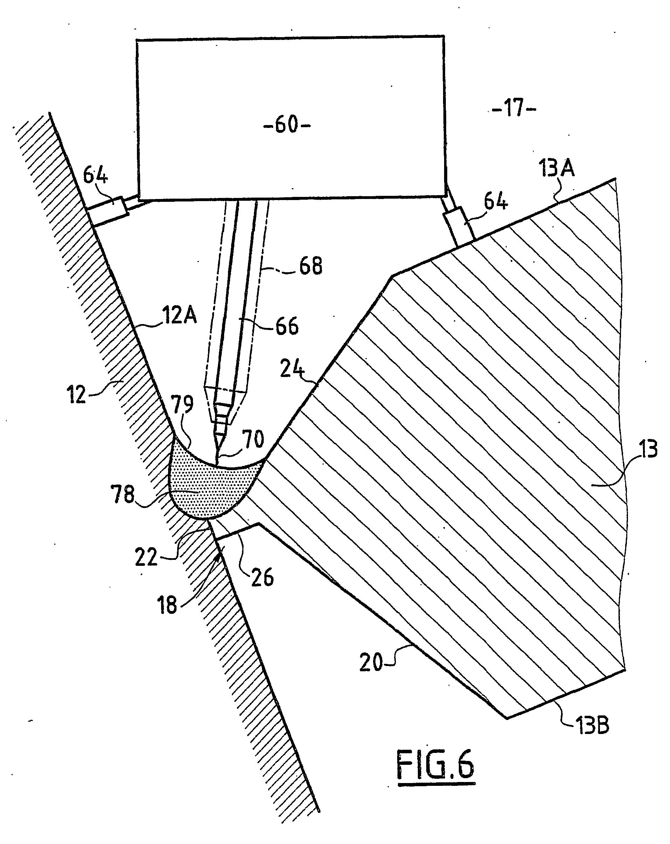

A cet effet, suivant un premier mode de mise en oeuvre de l'invention illustré sur la figure 6, le tronçon de membrure à souder est disposé de sorte que la bissectrice de l'angle général défini entre la surface principale 12A et le chanfrein 24 s'étend sensiblement verticalement.

Un chariot auto-moteur 60 équipé d'une caméra d'observation et de moyens de guidage est introduit dans le conduit 17. Le chariot 60 comporte des galets 64 d'appui sur la surface latérale intérieure 13A du raidisseur et sur la surface principale 12A de la plaque.

Le chariot porte en outre une électrode de soudage réfractaire 66 entourée d'un tube 68 d'amenée d'un gaz inerte tel que les mélanges de gaz de soudage (argon ou hélium). L'électrode 26 est maintenue à distance de la lèvre d'appui 18 de sorte qu'un arc électrique 70 soit établi entre d'une part l'électrode et l'angle défini par la lèvre d'appui 18 et la plaque 12, une différence de potentiel étant appliquée entre le tronçon de membrure à souder et l'électrode 26.

De préférence, l'arc est établi au voisinage immédiat de l'intersection de la surface principale 12A et de la lèvre d'appui 18, cette zone étant désignée par la flèche F sur la figure 4.

L'élévation de la température de la lèvre d'appui 18 conduit à la fusion du métal la constituant, au moins dans la partie de l'excroissance latérale intérieure 28 de celle-ci ainsi que de la partie accolée à la surface 12A.

Ainsi, la lèvre 18 joue le rôle de métal d'apport et permet, sous l'action de la chaleur, d'obtenir une pénétration satisfaisante entre le raidisseur 13 et la plaque 12 dans la région de la lèvre d'appui.

Le soudage sans apport de matière depuis l'intérieur du conduit 17 est réalisé suivant toute la longueur de la lèvre d'appui 18, et notamment suivant toute la longueur du raidisseur 13, si la lèvre d'appui s'étend suivant toute sa longueur.

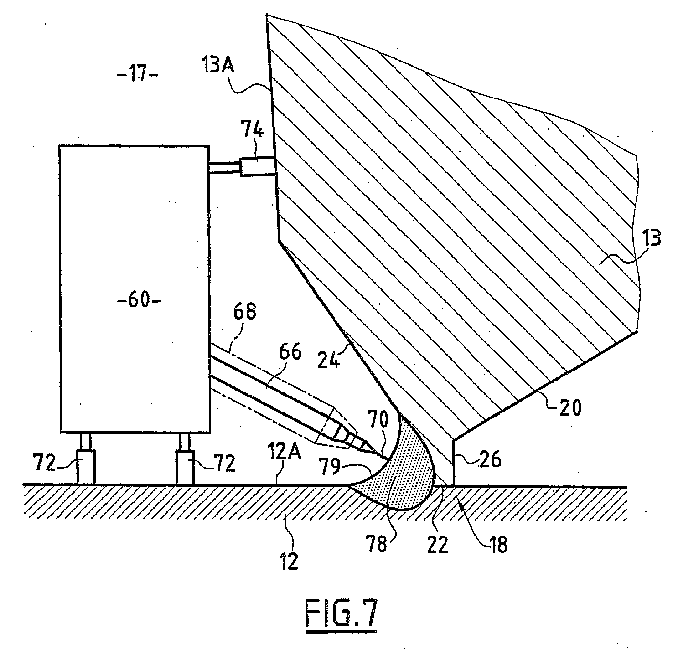

Dans la variante de mise en oeuvre illustré sur la figure 7, la membrure est positionnée de telle sorte que la plaque 12 s'étende avec sa face principale 12A généralement horizontalement. Le chariot auto-moteur 60 roule sur cette surface grâce à des roues 72 et se positionne par rapport au raidisseur 13 par un galet d'appui latéral 74. Dans ce mode de réalisation également, le chariot auto-moteur déplace suivant la longueur de la lèvre d'appui 18 l'électrode 66 afin d'établir un arc électrique 70 assurant la fonte de la partie intérieure de la lèvre d'appui.

On constate, dans les deux variantes de mise en oeuvre du procédé, que l'excroissance latérale intérieure 28, associé à la courbure initiale du profil concave 30, permet d'obtenir une soudure 78 assurant un raccordement de la surface principale 12A et du chanfrein 24 avec un profil extérieur courbe 79 se reliant généralement tangentiellement d'une part au chanfrein 24 et d'autre part à la surface principale 12A.

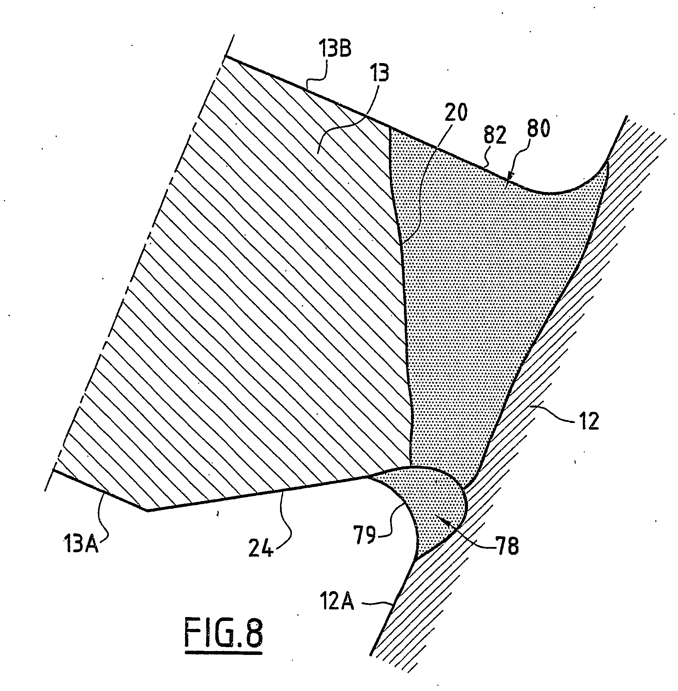

Après soudage intérieur sans apport de métal, les brides 40 de maintien sont retirées et l'espace défini entre la surface d'appui 12A et le chanfrein extérieur 20 est empli par un cordon de soudure extérieur 80, comme illustré sur la figure 8. La soudure 78 sert d'appui aux premières passes de la soudure extérieure.

Ce cordon de soudure est obtenu par soudage en automatique sous flux, suivant un procédé connu en soi.

Le métal d'apport pour la réalisation du cordon de soudure 80 est tel que le cordon 80 emplit totalement et exactement l'espace défini entre la surface principale 12A et le chanfrein extérieur 20, la surface libre 82 de la soudure s'étendant dans le prolongement de la surface générale extérieure 13B du raidisseur.

Lors de la réalisation du cordon de soudure extérieur 80, la partie extérieure de la lèvre d'appui se trouve fondue du fait de son échauffement, et se trouve ainsi soudée à la plaque 12, comme illustré sur la figure 8.

La position de la lèvre d'appui 18 suivant l'épaisseur du raidisseur est déterminée à partir de calcul des efforts devant être appliqués sur la soudure. A partir de ces efforts, la largeur du cordon de soudure 80 est déterminée et la position de la lèvre d'appui est définie de sorte que la largeur du cordon de soudure 80 soit égale à la largeur de soudure nécessaire à l'obtention des caractéristiques mécaniques recherchées.

On conçoit qu'avec un tel procédé de soudage, la soudure présente une bonne résistance à la fatigue. De plus, la mise en oeuvre du procédé de soudage est relativement aisée, puisque aucun soudage avec apport de matière n'est réalisé à l'intérieur du conduit 17 et que seul un apport de matière est effectué depuis l'extérieur.

Un soudage sans apport de matière réalisé depuis l'intérieur du conduit 17 est rendu possible grâce à la présence de la lèvre d'appui 18.

En variante, afin d'assurer la soudure sans apport de métal intérieur, le chariot automoteur 60 se déplace suivant la longueur du tronçon à souder, non pas à l'intérieur de l'espace délimité par le raidisseur mais, au contraire, à l'extérieur de l'espace 17 suivant la longueur du tronçon. L'électrode 66 assurant le soudage est portée à l'extrémité d'un bras solidaire du chariot automoteur et engagé dans l'espace 17 depuis une extrémité ouverte de celui-ci.

Le procédé de soudage peut être mis en oeuvre dans toutes les positions et notamment avec la soudure à réaliser disposée verticalement.

## Revendications

1. Procédé de fabrication d'un tronçon (11) d'une membrure (10) d'une jambe (2) de support d'une plate-forme d'exploitation en mer, la membrure (10) comportant une plaque principale (12) munie, sur au moins un bord longitudinal, de dents (14) formant une crémaillère et au moins un raidisseur de forme semi-cylindrique soudé sur une face principale (12A) de la plaque principale (12) suivant deux bords longitudinaux (16), le raidisseur (13) et la plaque (12) délimitant un conduit (17),
**caractérisé en ce qu'**il comporte, appliquées à au moins une partie de la longueur de la membrure (10), les étapes consistant en :
a) usiner chaque bord longitudinal (16) du raidisseur (13) pour ménager suivant le bord longitudinal (16), une lèvre (18) pour l'appui sur la surface principale (12A) de la plaque principale (12), en ménageant suivant le bord longitudinal (16) un chanfrein extérieur (20) du côté opposé au conduit (17) ;
b) appliquer une semelle (22) de la lèvre d'appui (18) sur la surface principale (12A) de la plaque (12) ;
c) échauffer la lèvre d'appui (18) pour assurer son soudage avec la plaque (12) et former une soudure d'appui (78) ; et
d) former un cordon de soudure (80) par apport de matière depuis l'extérieur du conduit (17) dans l'espace délimité entre la soudure d'appui (78), le chanfrein extérieur (20) et la surface principale (12A) de la plaque principale (12).

2. Procédé selon la revendication 1, **caractérisé en ce que** l'apport de chaleur pour provoquer l'échauffement de la lèvre d'appui (18) en vue de son soudage avec la plaque (12) est assuré depuis l'intérieur du conduit (17).

3. Procédé selon la revendication 1 ou 2, **caractérisé en ce que** l'échauffement de la lèvre d'appui (18) pour assurer son soudage avec la plaque (12) s'effectue sans apport de matière.

4. Procédé selon l'une quelconque des revendications précédentes, **caractérisé en ce que** l'échauffement de la lèvre d'appui (18) pour assurer son soudage avec la plaque (12) est effectué par une méthode de soudage à l'arc sous protection gazeuse avec électrode réfractaire.

5. Procédé selon l'une quelconque des revendications précédentes, **caractérisé en ce qu'**il comporte, appliquée à au moins une partie de la longueur de la membrure (10), une étape d'usinage de chaque bord longitudinal (16) du raidisseur (13) pour ménager sur ce bord un chanfrein intérieur (24) du côté de la lèvre d'appui (18) tourné vers le conduit (17).

6. Procédé selon l'une quelconque des revendications précédentes, **caractérisé en ce que** le cordon de soudure (80) formé depuis l'extérieur du conduit (17) emplit totalement l'espace délimité entre la surface principale (12A) de la plaque, le chanfrein extérieur (20) et la lèvre d'appui (18).

7. Procédé selon l'une quelconque des revendications précédentes, **caractérisé en ce que** la lèvre d'appui (18) est comprise dans la moitié de l'épaisseur(e) du raidisseur (13) disposée du côté du conduit intérieur (17).

8. Procédé selon l'une quelconque des revendications précédentes, **caractérisé en ce que** la distance (d) séparant la surface latérale intérieure (13A) du raidisseur définie du côté du conduit (17) de la lèvre d'appui (18) est comprise entre 20 et 40 % de l'épaisseur (e) du raidisseur (13).

9. Procédé selon l'une quelconque des revendications précédentes, **caractérisé en ce que** la lèvre d'appui (18) présente une excroissance latérale intérieure (28) du côté du conduit (17) au voisinage de sa semelle (22).

10. Procédé selon la revendication 9, **caractérisé en ce que** la hauteur minimale (T) de l'excroissance (28) est comprise entre 0 et 8 mm.

11. Procédé selon la revendication 9 ou 10 prise avec la revendication 6, **caractérisé en ce qu'**un profil en creux (30) est défini entre l'excroissance (28) et le chanfrein intérieur (24).

12. Procédé selon l'une quelconque des revendications précédentes, **caractérisé en ce que** la hauteur (h) de la lèvre d'appui (18) mesurée à la base du chanfrein extérieur (20) est comprise entre 6 et 12 mm.

13. Procédé selon l'une quelconque des revendications précédentes, **caractérisé en ce que** la largeur de la semelle (22) est comprise entre 2 et 15 mm.

## Patentansprüche

1. Verfahren zum Herstellen eines Teilstücks (11) eines Glieds (10) einer Stützstrebe (2) einer Hochseebohr- bzw. -förderplattform, wobei das Glied (10) eine Hauptplatte (12), welche zumindest an einem Längsrand mit Zähnen (14) versehen ist, die eine Zahnstange bilden, und zumindest eine Versteifung von halbzylindrischer Form aufweist, die auf einer Hauptseite (12A) der Hauptplatte (12) an zwei Längsrändern (16) entlang aufgeschweißt ist, wobei die Versteifung (13) und die Platte (12) einen Kanal (17) bilden,
**dadurch gekennzeichnet, dass** das Verfahren, angewandt auf zumindest einen Abschnitt der Länge des Glieds (10), die folgenden Verfahrensschritte aufweist:
a) Maschinelles Bearbeiten eines jeden Längsrands (16) der Versteifung (13) zum Anbringen einer Lippe (18) längs des Längsrands (16) zur Auflage auf der Hauptseite (12A) der Hauptplatte (12), wobei dem Längsrand (16) folgend eine äußere Fase (20) auf der dem Kanal (17) gegenüber liegenden Seite vorgesehen wird;
b) Aufbringen einer Sohle (22) der Auflagelippe (18) auf der Hauptfläche (12A) der Platte (12);
c) Erwärmen der Auflagelippe (18) zum Sicherstellen ihres Verschweißens mit der Platte (12) und Bilden einer Unter- bzw. Sockelschweißnaht (78); und
d) Bilden einer Schweißraupe (80) durch Werkstoffzusatz von der Außenseite des Kanals (17) her in den abgegrenzten Raum zwischen der Sockelschweißnaht (78), der äußeren Fase (20) und der Hauptfläche (12A) der Hauptplatte (12).

2. Verfahren nach Anspruch 1, **dadurch gekennzeichnet, dass** die Wärmezufuhr zum Einleiten der Erwärmung der Auflagelippe (18) hinsichtlich ihres Verschweißens mit der Platte (12) vom Inneren des Kanals (17) her sichergestellt wird.

3. Verfahren nach Anspruch 1 oder 2, **dadurch gekennzeichnet, dass** die Erwärmung der Auflagelippe (18) zum Sicherstellen ihres Verschweißens mit der Platte (12) ohne Werkstoffzusatz erfolgt.

4. Verfahren nach einem der vorhergehenden Ansprüche, **dadurch gekennzeichnet, dass** die Erwärmung der Auflagelippe (18) zum Sicherstellen ihres Verschweißens mit der Platte (12) durch ein Lichtbogenschweißverfahren erfolgt.

5. Verfahren nach einem der vorhergehenden Ansprüche, **dadurch gekennzeichnet, dass** es, angewandt auf zumindest einen Abschnitt der Länge des Glieds (10), einen folgenden Verfahrensschritt aufweist: Maschinelles Bearbeiten eines jeden Längsrands (16) der Versteifung (13) zum Anbringen einer inneren Fase (24) auf diesem Rand der Seite der Auflagelippe (18), die zum Kanal (17) weist.

6. Verfahren nach einem der vorhergehenden Ansprüche, **dadurch gekennzeichnet, dass** die von der Außenseite des Kanals (17) her gebildete Schweißraupe (80) den zwischen der Hauptfläche (12A), der äußeren Fase (20) und der Auflagelippe (18) abgegrenzten Raum vollständig ausfüllt.

7. Verfahren nach einem der vorhergehenden Ansprüche, **dadurch gekennzeichnet, dass** die Auflagelippe (18) in der Hälfte der Dicke (e) der Versteifung (13) angeordnet wird, die auf der Seite des inneren Kanals (17) liegt.

8. Verfahren nach einem der vorhergehenden Ansprüche, **dadurch gekennzeichnet, dass** der Abstand (d), welcher die von der Seite des Kanals (17) gebildete innere Seitenfläche (13A) der Versteifung von der Auflagelippe (18) trennt, im Bereich zwischen 20 und 40% der Dicke (e) der Versteifung (13) liegt.

9. Verfahren nach einem der vorhergehenden Ansprüche, **dadurch gekennzeichnet, dass** die Auflagelippe (18) einen seitlichen inneren Vorsprung (28) zur Seite des Kanals (17) hin neben ihrer Sohle (22) aufweist.

10. Verfahren nach Anspruch 9, **dadurch gekennzeichnet, dass** die minimale Höhe (T) des Vorsprungs (28) zwischen 0 und 8mm beträgt.

11. Verfahren nach Anspruch 9 oder 10 zusammen mit Anspruch 6, **dadurch gekennzeichnet, dass** zwischen dem Vorsprung (28) und der inneren Fase (24) ein Hohlprofil bzw. Hohlquerschnitt (30) gebildet ist.

12. Verfahren nach einem der vorhergehenden Ansprüche, **dadurch gekennzeichnet, dass** die Höhe (h) der Auflagelippe (18), gemessen zur Basis der äußeren Fase (20) zwischen 6 und 12mm beträgt.

13. Verfahren nach einem der vorhergehenden Ansprüche, **dadurch gekennzeichnet, dass** die Breite der Sohle (22) zwischen 2 und 15mm beträgt.

## Claims

1. A method for manufacturing a section (11) of a frame (10) of a support leg (2) of an offshore production platform, the frame (10) comprising a main plate (12) equipped, on at least one longitudinal edge, with teeth (14) forming a rack and at least one semi-cylindrically shaped stiffener welded onto a main face (12A) of the main plate (12) along two longitudinal edges (16), the stiffener (13) and the plate (12) delimiting a conduit (17),
**characterised in that** it comprises, applied to at least one part of the length of the frame (10), the steps consisting of:
a) machining each longitudinal edge (16) of the stiffener (13) to provide, along the longitudinal edge (16), a lip (18) for bearing on the main surface (12A) of the main plate (12), by providing, along the longitudinal edge (16), an outer bevel (20) on the side opposite the conduit (17),
b) applying a sole piece (22) of the bearing lip (18) onto the main surface (12A) of the plate (12);
c) heating the bearing lip (18) to ensure that it becomes welded with the plate (12) and to form a bearing weld (78); and
d) forming a weld seam (80) by supplying material from outside the conduit (17) into the space delimited between the bearing weld (78), the outer bevel (20) and the main surface (12A) of the main plate (12).

2. The method according to Claim 1, **characterised in that** the supply of heat for causing the heating up of the bearing lip (18), with a view to welding it to the plate (12), is ensured from inside the conduit (17).

3. The method according to Claim 1 or 2, **characterised in that** the heating up of the bearing lip (18) to ensure that it becomes welded with the plate (12) is carried out without material being supplied.

4. The method according to any one of the preceding claims, **characterised in that** the heating up of the bearing lip (18) to ensure that it becomes welded with the plate (12) is carried out by an inert gas shielded arc welding method with a non-fusing electrode.

5. **The method according to any one of the preceding claims, characterised in that** it comprises, applied to at least one part of the length of the frame (10), a step of machining each longitudinal edge (16) of the stiffener (13) in order to provide on this edge an inner bevel (24) on the side of the bearing lip (18) facing the conduit (17).

6. The method according to any one of the preceding claims, **characterised in that** the weld seam (80) formed from outside the conduit (17) fully fills the space delimited between the main surface (12A) of the plate, the outer bevel (20) and the bearing lip (18).

7. The method according to any one of the preceding claims, **characterised in that** the bearing lip (18) is included **in that** half of the thickness (e) of the stiffener (13) that is disposed on the side of the inner conduit (17).

8. The method according to any one of the preceding claims, **characterised in that** the distance (d) separating the stiffener inner lateral surface (13A) defined on the side of the conduit (17) of the bearing lip (18) is between 20 and 40% of the thickness (e) of the stiffener (13).

9. The method according to any one of the preceding claims, **characterised in that** the bearing lip (18) has an inner lateral protruberance (28) on the side of the conduit (17) in the vicinity of its sole piece (22).

10. The method according to Claim 9, **characterised in that** the minimum height (T) of the protruberance (28) is between 0 and 8mm.

11. The method according to Claim 9 or 10, when dependent on Claim 6, **characterised in that** a hollow section (30) is defined between the protruberance (28) and the inner bevel (24).

12. The method according to any one of the preceding claims, **characterised in that** the height (h) of the bearing lip (18), measured at the base of the outer bevel (20), is between 6 and 12mm.

13. The method according to any one of the preceding claims, **characterised in that** the width of the sole piece (22) is between 2 and 15mm.
